# EUROPEAN PATENT APPLICATION

(11) **EP 4 844 551 A1**
(43) Date of publication of application: **25.11.2026**
(21) Application number: 25741568.7
(22) Date of filing: 16.01.2025
(51) Int. Cl.: G06F 3/0481

(54) **METHOD AND APPARATUS FOR CONTENT INTERACTION, AND DEVICE AND STORAGE MEDIUM**

(30) Priority: 16.01.2024 CN 202410064862
(71) Applicant: Beijing Zitiao Network Technology Co., Ltd., Beijing 100190 (CN)
(72) Inventor: GAO, Wenyu, Beijing 100028 (CN); SONG, Shaohua, Beijing 100028 (CN)
(74) Representative: Marks & Clerk LLP
(86) International application number: PCT/CN2025/072694
(87) International publication number: WO 2025/153007

(57) **Abstract**

According to embodiments of the disclosure, a method, an apparatus, a device, and a storage medium for content interaction are provided. The method includes: receiving, from an interactive input area, interactive content of a user for a media item while presenting the media item; and performing a target operation for the media item in response to detecting that the interactive content matches target content corresponding to the target operation. In this way, the user can trigger execution of a corresponding operation for a current media item by sending comments, instead of searching for and triggering the operation through a complex interaction path, which makes the interaction process more efficient and interesting, improves the user interaction experience, and makes the user more willing to participate in the interaction.

## Description

The present application claims priority to Chinese Patent Application No. 202410064862.4, filed on January 16, 2024 and entitled "METHOD AND APPARATUS FOR CONTENT INTERACTION, DEVICE, AND STORAGE MEDIUM", the disclosures of which are incorporated herein by reference in their entireties.

### FIELD

Example embodiments of the present disclosure generally relate to the field of computers, and in particular to a method, an apparatus, a device, and a computer-readable storage medium for content interaction.

### BACKGROUND

At present, more and more applications are designed to provide various services for users. For example, a user may post, browse, and view media items in an application. The media items may include various types of content, such as videos, images, image sets, text, audio, and so on. The user may also perform any appropriate type of operation on the media items in the application, such as performing a like operation, a favorite operation, or a comment operation, and so on for the media items.

### SUMMARY

In a first aspect of the present disclosure, a method for content interaction is provided. The method includes: receiving, from an interactive input area, interactive content of a user for a media item while presenting the media item; and performing a target operation for the media item in response to detecting that the interactive content matches target content corresponding to the target operation.

In a second aspect of the present disclosure, an apparatus for content interaction is provided. The apparatus includes: an interaction receiving module configured to receive, from an interactive input area, interactive content of a user for a media item while presenting the media item; and an operation execution module configured to perform a target operation for the media item in response to detecting that the interactive content matches target content corresponding to the target operation.

In a third aspect of the present disclosure, an electronic device is provided. The device includes at least one processing unit; and at least one memory, the at least one memory being coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, the computer program being executable by a processor to implement the method of the first aspect.

In a fifth aspect of the present disclosure, a computer program product is provided. The computer program product is tangibly stored in a computer storage medium and includes computer-executable instructions which, when executed by a device, cause the device to perform the method of the first aspect.

It should be understood that the summary described in this disclosure is not intended to limit key features or important features of embodiments in the present disclosure, nor is it intended to limit the scope in the present disclosure. Other features in the present disclosure will become readily understood from the following description.

### BRIEF DESCRIPTION OF THE DRAWINGS

The above and other features, advantages, and aspects of the various embodiments in the present disclosure will become more apparent from the following detailed description taken in combination with the accompanying drawings. In the drawings, the same or similar reference numbers refer to the same or similar elements, where:
Fig. 1 illustrates a schematic diagram of an example environment in which the embodiments of the present disclosure can be implemented;
Fig. 2A to Fig. 2E illustrate schematic diagrams of example pages according to some embodiments of the present disclosure;
Fig. 3 illustrates a flowchart of a process for content interaction according to some embodiments of the present disclosure;
Fig. 4 illustrates a block diagram of an apparatus for content interaction according to some embodiments of the present disclosure; and
Fig. 5 illustrates a block diagram of an electronic device in which one or more embodiments of the present disclosure can be implemented.

### DETAILED DESCRIPTION OF EMBODIMENTS

The embodiments in the present disclosure will be described in more detail below with reference to the accompanying drawings. Although certain embodiments in the present disclosure are shown in the drawings, it would be appreciated that the present disclosure can be implemented in various forms and should not be interpreted as limited to the embodiments described in this specification. On the contrary, these embodiments are provided for a more thorough and complete understanding in the present disclosure. It would be appreciated that the accompanying drawings and embodiments in the present disclosure are only for the purpose of illustration and are not intended to limit the scope of protection in the present disclosure.

In the description of the embodiments of the present disclosure, the term "including" and similar terms would be appreciated as open-ended inclusion, that is, "including but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be included below.

Herein, unless expressly stated herein, performing a step "in response to A" does not mean that the step is performed immediately after "A", but may include one or more intermediate steps.

It would be appreciated that the data involved in this technical solution (including but not limited to the data itself, data acquisition or use) shall comply with the requirements of corresponding laws, regulations and relevant provisions.

It would be appreciated that before the technical solution disclosed in the embodiments in the present disclosure is used, users should be informed of the type, the scope of use, the use scenario, etc. of the personal information involved in the present disclosure in an appropriate manner and in accordance with relevant laws and regulations, and the authorization of the users may be obtained.

For example, in response to an active request being received from a user, a prompt message is sent to the user to explicitly prompt the user that the operation requested by the user would need acquisition and use of personal information of the user. As such, according to prompt information, users may choose whether to provide personal information to the software or hardware, such as an electronic device, application, server or storage medium, that performs the operations of the technical solution in the present disclosure.

As an optional but non-limiting implementation, in response to the active request being received from the user, the prompt information may be sent to the user via, for example, a pop-up window in which the prompt information may be presented in text. In addition, the pop-up window may also contain selection controls configured for the user to choose "agree" or "disagree" to provide the personal information to the electronic device.

It would be appreciated that the above process of notification and acquisition of user authorization is only illustrative and does not limit the implementations in the present disclosure. Other methods that meet relevant laws and regulations may also be applied to the implementations in the present disclosure.

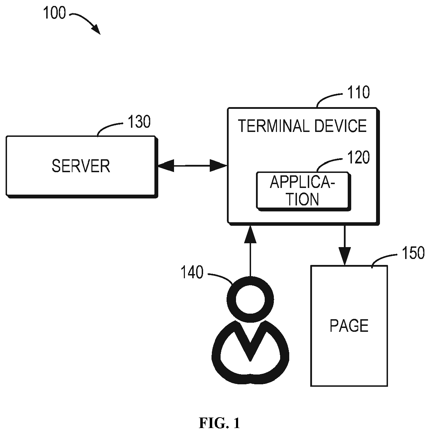

Fig. 1 illustrates a schematic diagram of an example environment 100 in which the embodiments of the present disclosure can be implemented. In this example environment 100, an application 120 is installed in a terminal device 110. A user 140 may interact with the application 120 via the terminal device 110 and/or an attached device of the terminal device 110.

In some embodiments, the application 120 may be a content sharing application (e.g., a video application that mainly focuses on video sharing), which is capable of providing the user 140 with various services related to media items (which may also be referred to as media content, media content items, content items, etc.), including browsing, commenting, forwarding, creating (e.g., shooting and/or editing), posting, and so on of the media items. In some embodiments, the application 120 may also be any other appropriate application in which media items may be presented. Herein, each "media item" includes one or more types of content, such as video, image, dynamic image, image set, audio, text, and so on.

In the environment 100 of Fig. 1, if the application 120 is in an active state, the terminal device 110 may present a page 150 of the application 120. The page 150 may include various types of pages that may be provided by the application 120, such as a media item presentation page, a media item creation page, a media item posting page, a message page, a personal homepage, and so on. The application 120 may provide a media item viewing function to view various media items posted in the application 120.

In some embodiments, the terminal device 110 communicates with the server 130 to implement the provision of the services of the application 120. The terminal device 110 may be any type of mobile terminal, fixed terminal or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including the accessories and peripherals of these devices or any combination thereof. In some embodiments, the terminal device 110 may also support any type of user-oriented interface (such as a "wearable" circuit, etc.). The server 130 may be various types of computing systems/servers capable of providing computing capability, including but not limited to mainframes, edge computing nodes, computing devices in cloud environments, and so on.

It should be understood that the structure and function of each element in the environment 100 are described only for the purpose of illustration, and do not imply any limitation on the scope of the present disclosure.

Traditionally, if a user expects to access a certain media item again later, the user may perform a specific interactive operation (for example, a long-press operation or clicking an access entry such as "more functions") on the media item to trigger a setting menu for the media item. The user may add the media item to a watch-later list, also referred to as a "watch later" list, by triggering a watch-later addition control in the setting menu. The user may later access the media item through the watch-later list. When being added to the watch-later list, a playback progress of the media item may be archived, which may meet the user's need for subsequent revisiting. However, such an interaction manner is relatively complicated, and the setting menu often includes a large number of controls, so the user needs to spend a certain amount of time and effort to find the watch-later addition control, and is required to be familiar with access paths of different operations. This may affect efficiency of user interaction, causing inconvenience and poor user experience. In addition to the operation of adding to the watch-later list, if the user intends to trigger some other operations for the media item currently being watched, it may also be necessary to go through a relatively long access path to select the corresponding operation.

On the other hand, traditionally, an operation such as a like control and a favorite control is provided in the presentation page of a media item for the user to directly select. If the user expects to perform a certain operation for the media item, the user needs to trigger a specific control provided by the application to perform an operation corresponding to the control for the media item. For example, the user may perform a like operation on the media item by triggering the like control, and the user may perform a favorite operation on the media item by triggering the favorite control, and so on. However, such an interaction manner is relatively monotonous, which may affect the interest of the user in performing interaction, and also lead to a poor user experience.

According to the embodiments of the present disclosure, a solution for content interaction is proposed. In the solution according to the embodiments of the present disclosure, the interactive content of the user for the media item is received from the interactive input area while presenting the media item. The target operation for the media item is performed in response to detecting that the interactive content matches the target content corresponding to the target operation. In this way, the user can trigger the corresponding operation to be performed on the current media item by sending comments, instead of searching for and triggering the operation through a complex interaction path, which makes the interaction process more efficient and interesting, improves the user interaction experience, and makes the user more willing to participate in the interaction.

Some example embodiments of the present disclosure will be described below with continued reference to the drawings.

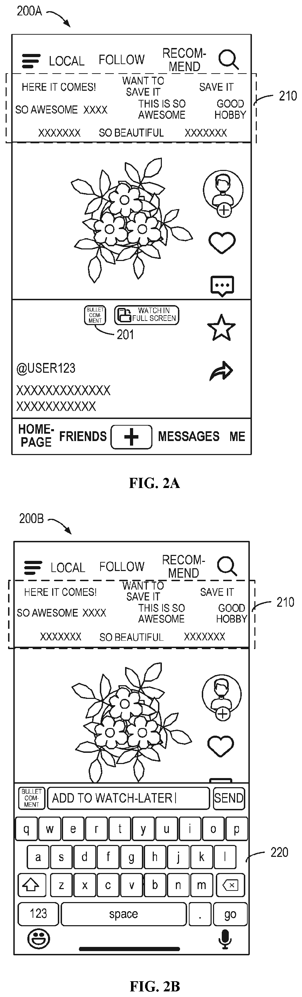

Fig. 2A to Fig. 2E show schematic diagrams of example page 200A to example page 200E (which may also be referred to as example 200A to example 200E for short) according to some embodiments of the present disclosure. It should be understood that the pages shown in the drawings are only examples, and various page designs may actually exist. Each graphic element in the page may have different arrangements and different visual representations, one or more elements in the page may be omitted or replaced, and there may also be one or more other elements. The embodiments of the present disclosure are not limited in this regard.

The pages shown in example 200A to example 200E may be presented at the terminal device 110. For the convenience of discussion, example 200A to example 200E will be described with reference to the environment 100 of Fig. 1. It should be noted that the operations performed by the terminal device 110 and the operations performed by the terminal device 110 described below may be specifically performed by a related application (e.g., the application 120) installed on the terminal device 110.

In the environment 100, the terminal device 110 presents a page 150 of the application 120. In some cases, the page 150 presented by the terminal device 110 may be a specific presentation page of the application 120, and a media item may be presented in the presentation page. The presentation page may also be referred to as a media item presentation page, a media item display page, a content display page, and so on. In some embodiments, the presentation page refers to a page for displaying or pushing media items and other related information to the user. The media items that may be presented in the presentation page may include various types of media items. The media items to be presented in this presentation page may be determined according to the needs of application design, actual scenarios, etc.

In some embodiments, the presentation page may include a home page of the application 120, or a recommended home page in a group of home pages of the application 120. The recommended media items displayed to the user in the recommended home page are sometimes also referred to as a recommended information flow. In some embodiments, the presentation page may include other pages under the home page of the application 120, such as a follow page (in which the media items posted by a group of users followed by the current user are displayed), a local page (in which the media items posted by other users in the same region as the current user are displayed), or media items aggregated or categorized in other manners.

If there is a large amount of information that needs to be presented in the application and the information is complicated, the information is often presented in categories, so as to facilitate the user to obtain the information in a simpler manner. Presenting information in categories often requires setting a plurality of navigation tabs corresponding to different information on the page. The user may obtain, by switching different navigation tabs, the page corresponding to a navigation tab. In some embodiments, in the application 120, the navigation tabs for navigating to different pages may be provided. In the embodiments of the present disclosure, a certain page, including the presentation page, may be presented at least by selecting a predetermined navigation tab. That is, the predetermined navigation tab in the application may be used to navigate to the presentation page.

As shown in Fig. 2A, example 200A illustrates an example of the presentation page. The current page of the application 120 provides a plurality of navigation tabs for navigating to various pages, such as "local", "follow", "recommend", "homepage", "friends", and so on. The plurality of navigation tabs may also have different levels, for example, the navigation tabs "homepage", "friends", etc. may be the first level, and the navigation tabs "city", "follow", "recommend" may be the second level. The first-level navigation tab, for example, may correspond to a group of pages (e.g., a group of home pages), and the page corresponding to the second-level navigation tab may be, for example, at least one of the group of pages corresponding to the first-level navigation tab (e.g., the recommended home page corresponding to the navigation tab "recommend" is one of the group of home pages corresponding to the navigation tab "homepage").

In example 200A shown in Fig. 2A, if the terminal device 110 detects the selection operation on the navigation tab "homepage", the terminal device 110 may present the home page of the application 120. For example, the terminal device 110 may present the recommended home page (i.e., the page corresponding to the navigation tab "recommend") in the plurality of home pages by default. On this basis, if the terminal device 110 detects the selection operation on the navigation tab "follow", the terminal device 110 may switch to presenting the follow home page (i.e., the page corresponding to the navigation tab "follow") in the plurality of home pages. It should be understood that this is only illustrative and is not intended to limit the solution of the present disclosure. In some embodiments, alternatively or additionally, the presentation page may also be presented by detecting the starting operation of the application, for example, the presentation page is the default page presented when the application is started. When the presentation page is presented after the application is started, the media item may be presented in the presentation page.

The presentation page is at least used for presenting the media item. In some embodiments, the terminal device 110 may present the media item in the presentation page in any appropriate view mode (e.g., a single-column view mode, a double-column view mode, a three-column view mode, etc.). For example, in example 200A, the terminal device 110 presents the media item in the single-column view mode.

In the embodiments of the present disclosure, the terminal device 110 may receive the interactive content of the user (e.g., the user 140) for the media item from the interactive input area while presenting the media item (e.g., presenting the media item in the presentation page as shown in example 200A). The interactive input area may include, for example, a comment input area. The corresponding interactive content may include, for example, comment content. The comment content may include one or more types of comments supported by the media item. The type of the comment content may include bullet comments, regular comments, live comments, and so on. The comment input area may include, for example, an input box for the comment content. In some embodiments, the comment input area for bullet comments and the comment input area for other comments may be different. That is, in the presentation page of the media item, both an input area for general comments and an input area for bullet comments may be provided. Certainly, depending on the specific application design, the presentation page of the media item may include a single comment input area for receiving a single type or multiple types of comments.

In some embodiments, the terminal device 110 may also present the received interactive content in the interactive display area of the media item. The interactive display area may include, for example, a comment display area. That is, the terminal device 110 may present the received comment content in the comment display area, for example. For different types of comment content, the comment display area may be different. The comment display area may include, for example, a bullet comment display area, a comment page, a comment display area of a live page, and so on. The comment display area may be used to present comments of different users on the media item. It should be noted that the comment display area may not only be used to present the comment content input by the user 140, but also the comment content input by other users.

For example, as shown in Fig. 2A and Fig. 2B, example 200A includes a bullet comment display area 210. The bullet comment display area 210 may display all bullet comments for the media item. Example 200A also includes a control 201. The terminal device 110 may determine that an indication of receiving a bullet comment is received in response to receiving a trigger operation on the control 201. The terminal device 110 may then present example 200B. Example 200B includes an input panel 220. The terminal device 110 may receive a user input via the input panel 220 and determine the comment content of the user for the media item (i.e., the media item currently presented in example 200A) based on the user input. For example, the terminal device 110 may receive the user input (e.g., the text "add to watch later" shown in the figure) via the input panel 220 and determine the received user input as the comment content of the user for the media item. For another example, the terminal device 110 may receive a voice input by the user via the input panel 220. The terminal device 110 may recognize the received voice to determine a text matching the received voice. The terminal device 110 may then determine the determined text as the comment content of the user for the media item.

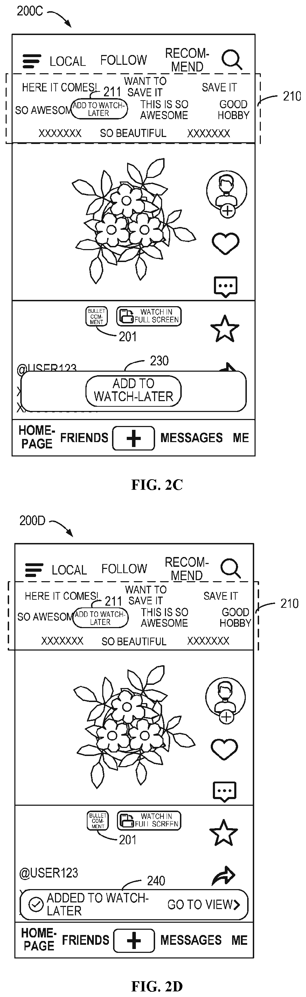

In some embodiments, the terminal device 110 may also present the received comment content in the input box of the input panel 220. The input panel 220 may include a sending control. The terminal device 110 may determine that the comment content input by the user is received in response to receiving a trigger operation on the sending control. If the received comment content is a bullet comment, the terminal device 110 may present the received comment content in the bullet comment display area 210. In some embodiments, in order to facilitate the user in recognizing the user's own comment content, the terminal device 110 may prominently present the comment content of the user in the bullet comment display area 210. For example, the terminal device 110 may prominently present the bullet comment 211 from the user 140 in the bullet comment display area 210 of example 200C shown in Fig. 2C. The terminal device 110 may add a border to the comment content of the user, highlight the comment content of the user, present the comment content of the user in a specific color, enlarge the font of the comment content of the user, etc. to prominently present the comment content of the user, and the present disclosure does not limit the specific prominent presentation manner.

The terminal device 110 may perform content detection on the received comment content. The terminal device 110 may perform the target operation for the media item in response to detecting that the comment content matches the target content corresponding to the target operation. The target operation may include an interactive operation or a playback control operation for the media item. The interactive operation may include a watch-later addition operation of adding the media item to a watch-later list of the user, a favorite operation of adding the media item to a favorite list of the user. In some embodiments, for the media item added to the watch-later list, the current playback progress of the media item will be archived. In this way, the next time the user views the media item, the user may continue to watch the media content item from the current playback progress. The media item added to the favorite list means that the user expects to favorite the media item, and the playback progress of the media item may not be archived. Alternatively or additionally, the interactive operation may include a like operation on the media item, a prompt operation on a target control, and so on. The target control includes a control applicable to the media item, that is, a control capable of triggering an interactive operation or playback control on the media item. The prompt operation on the target control may, for example, prompt the user of the location of the target control or directly provide the target control to the user. The playback control operation may include a setting operation of a playback control parameter of the media item. The playback control parameter may include, for example, a playback speed, a resolution, a view, and so on.

In some embodiments, the interactive content is the interactive content corresponding to a first-type interaction, and the target operation is an interactive operation corresponding to a second-type interaction. The second-type interaction is different from the first-type interaction. The interaction type corresponding to the interactive content is comment interaction, while the interaction type corresponding to the target operation is an interaction type other than sending comments for the comment interaction.

In some embodiments, the target content corresponding to the target operation may be predefined. Any appropriate manner may be adopted to determine whether the interactive content may match the target content corresponding to the target operation. For example, whether the interactive content matches the target content corresponding to the target operation may be determined based on a predetermined rule or algorithm. For another example, a model may also be used to determine whether the interactive content matches the target content corresponding to the target operation.

In some embodiments, the target content for matching may include a keyword corresponding to the target operation, or may include other types of content. In this case, any appropriate manner may be adopted to determine whether the comment content may match the keyword corresponding to the target operation. For example, a model may be used to determine whether the comment content may match the keyword corresponding to the target operation. Various text matching algorithms may also be used to determine whether the comment content matches the keyword corresponding to a certain operation. In some embodiments, fuzzy matching may also be supported, that is, it is not required that the text in the comment content completely matches the keyword, but the semantic similarity exceeds a predetermined threshold. In some embodiments, the comment content may include content other than content matching the keyword, as long as the matching information may be identified from the comment content. The embodiments of the present disclosure do not limit the specific implementation of matching the comment content with the keyword. It should be noted that the comment content and the keyword are only examples of the interactive content and the target content, respectively, and the present disclosure does not limit the specific interactive content and target content. For example, the target content may also include an identification, an image, and so on.

In some embodiments, the content detection of the interactive content may be performed locally by the terminal device 110, or may be performed by the server 130. In the embodiment performed by the server 130, the terminal device 110 may send the received interactive content to the server 130, and receive a detection result from the server 130, the detection result indicating whether the interactive content matches the target content corresponding to a certain operation. In the case of matching a certain operation, the server 130 also notifies the terminal device 130 of an identification of the matched operation.

In some embodiments, the corresponding target content may be configured for a specific operation or a plurality of different operations, respectively. For a single operation, one or more pieces of the configured target content may be provided. For example, if the target content includes a keyword, one or more configured keywords may be provided for a single operation. In some embodiments, the target content corresponding to the target operation may be determined based on the semantics of the name of the target operation. The terminal device 110, for example, may determine the semantics of the name of the target operation in any appropriate manner.

For the convenience of description, an example description is given below by taking a case where the interactive content includes comment content and the target content includes keywords as an example. The keyword may be determined based on the semantics of the name of the target operation. For example, for the watch-later addition operation, the corresponding keyword may include "archive", "store", "save", "add to watch later", "watch later", etc., the keyword corresponding to the like operation may include " awesome", " good", "like", etc., and the keyword corresponding to the playback control operation may include "1.25x speed" or "2x speed" (for the playback speed control operation), "horizontal screen" or "vertical screen" (for the playback layout control operation), etc. Each keyword may reflect the semantics of the name of the corresponding target operation. In this way, the user can try to send comment content based on the semantic understanding of various operations to trigger the corresponding operation, instead of learning the keywords corresponding to each operation in advance. This helps to improve the interest of the user in performing interaction.

In some embodiments, the terminal device 110 may directly perform the target operation on the media item currently presented in response to detecting that the interactive content matches the target corresponding to the target operation. The terminal device 110, for example, may perform the target operation for the media item currently presented in response to detecting that the comment content matches the keyword corresponding to the target operation. For example, in response to detecting the keyword "add to watch later", the media item may be added to the watch-later list corresponding to the "watch-later addition operation". For another example, in response to detecting the keyword "good", the terminal device 110 may perform a like operation on the media item.

In other embodiments, the terminal device 110 may also present the first prompt information for the target operation in response to detecting that the interactive content matches the target content corresponding to the target operation. By way of example, the terminal device 110 may present the first prompt information for the target operation in response to detecting that the comment content matches the keyword corresponding to the target operation. This first prompt information may indicate whether the execution of the target operation is confirmed. For example, the terminal device 110 may present the first prompt information in response to the comment content received in the presentation page including the keyword "add to watch later". The first prompt information may include, for example, the text "confirm to add to [watch later]?" to indicate whether to confirm the execution of the watch-later addition operation corresponding to the keyword "add to watch later ". In this case, the first prompt information can help the user to reconfirm the target operation that the user expects to perform on the media item.

In some embodiments, if the interactive operation is a prompt operation on the target control, the prompt operation is used for presenting the prompt information by the terminal device 110. The target control is used for triggering an interactive operation or a playback control operation on the media item. In some embodiments, the presented prompt information may include the target control associated with the target operation. The target control may be triggered by the user to perform a specific operation for the media item. For example, the target control may include a control for triggering an interactive operation, such as a like control, a favorite control, a watch-later addition control, and so on. The target control may also include a control for controlling a playback parameter, such as a speed adjustment control, etc. If the presentation page of the media item includes the target control, the prompt information presented by the prompt operation may be presented, for example, near the target control to prompt the user of the position of the target control. If the presentation page does not include the target control, the terminal device 110 may also directly provide the target control in the prompt information, for example. For example, in example 200C, in response to detecting that the interactive content matches the prompt operation of a certain target control, the prompt information 230 (i.e., the first prompt information) is presented. The prompt information 230 may include an operation control associated with the watch-later addition operation (e.g., the "add to watch later" control shown in the figure). In this example, the target control corresponds to the control for triggering the watch-later addition operation. The terminal device 110 may perform the corresponding watch-later addition operation, for example, in response to receiving the trigger operation on this control. In this way, the user can call up these controls through comments to trigger these controls, instead of searching for the controls of these operations through a long interaction path, which can improve the efficiency and interest of the interaction.

In some embodiments, the terminal device 110 may also present the second prompt information after the execution of the target operation is completed. The second prompt information may include, for example, a viewing entry for the execution result of the target operation. For example, if the target operation is a favorite operation or a watch-later addition operation, the terminal device 110 may present a viewing entry for the corresponding favorite list or watch-later list. If the target operation is a playback control operation, the terminal device 110 may present a viewing entry for the setting page for setting the playback control parameter. For example, as shown in Fig. 2D, the terminal device 110 may present the prompt information 240 (stunt second prompt information) in response to the completion of the watch-later addition operation. The prompt information 240 may indicate that the watch-later addition operation has been completed. The prompt information 240 may include a viewing entry for the watch-later list corresponding to the watch-later addition operation (e.g., the " Go to view " entry shown in Fig. 2D).

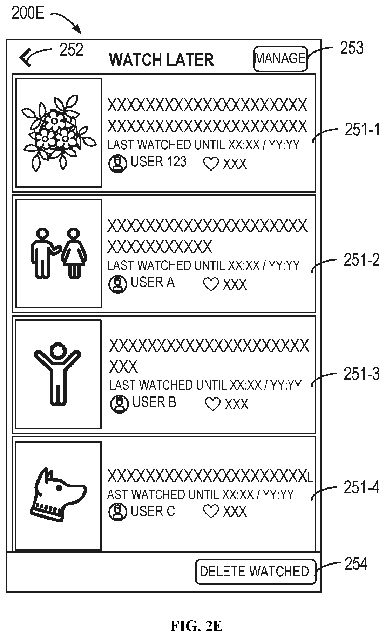

For example, the terminal device 110 may switch to present example 200E shown in Fig. 2E in response to receiving the trigger operation on the " Go to view " entry. Example 200E illustrates an example of the watch-later list. In example 200E, the terminal device 110 may present at least one media item card 251 (e.g., media item card 251-1, media item card 251-2, media item card 251-3, media item card 251-4, etc.). Each media item card 251 may correspond to one media item added to the watch-later list. The presentation order of the at least one media item card 251 in example 200E may be the chronological order in which the at least one media item is marked as the target type. That is, the media item card 251 corresponding to the media item marked as the target type later is displayed higher.

In some embodiments, the terminal device 110 may also present the playback progress of the corresponding media item in each media item card 251. For example, the terminal device 110 may present the playback progress "XX:XX / YY:YY" of the corresponding media item in the media item card 251-1. The terminal device 110 may play the media item corresponding to the media item card 251-1 based on the corresponding playback progress, for example, in response to detecting the click operation on the media item card 251-1.

Example 200E also includes a return control 252. The terminal device 110 may return to the presentation page of the media item (e.g., example 200A shown in Fig. 2A) in response to receiving the trigger operation on the return control 252. Example 200E also includes a management control 253. The terminal device 110 may manage at least one media item in the watch-later list (e.g., adjust the presentation order, view, style, etc. of at least one media item card 251 corresponding to the at least one media item in the watch-later list, delete a certain media item card, etc.) in response to receiving the trigger operation on the management control 253. Example 200E also includes a deletion control 254. The terminal device 110 may delete the media item in the watch-later list that has completed playback, for example, in response to receiving the trigger operation on the deletion control 254.

According to the embodiments of the present disclosure, for an operation with a long access path, the user may directly trigger the execution of the operation without multi-step interaction. On the other hand, even if some operation controls are directly displayed in the presentation page of the media item, by sending the interactive content containing the specific target content, the triggering of the operation and the sending of the interactive content may be completed simultaneously. Therefore, the embodiments of the present disclosure can achieve the triggering of the execution of a specific operation for a current media item through interaction without a complex interaction path. This can enable the interaction process to be more efficient and interesting, thereby improving the user interaction experience, and encouraging the user to participate in interaction more actively.

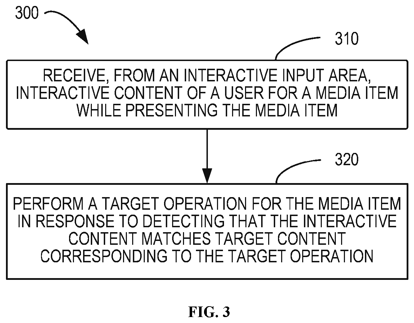

FIG. 3 illustrates a flowchart of a process 300 for content interaction according to some embodiments of the present disclosure. The process 300 may be implemented at a terminal device 110. The process 300 is described below with reference to FIG. 1.

At block 310, the terminal device 110 receives, from an interactive input area, interactive content of a user for a media item while presenting the media item.

At block 320, the terminal device 110 performs a target operation for the media item in response to detecting that the interactive content matches a keyword corresponding to a target operation.

In some embodiments, the process 300 further includes presenting the interactive content in an interactive display area of the media item.

In some embodiments, performing the target operation for the media item in response to detecting that the interactive content matches target content corresponding to the target operation includes: presenting first prompt information for the target operation in response to detecting that the interactive content matches target content corresponding to the target operation, the first prompt information indicating whether to confirm execution of the target operation; and performing the target operation for the media item in response to detecting confirmation of the execution of the target operation.

In some embodiments, the process 300 further includes presenting second prompt information after the execution of the target operation is completed, the second prompt information including a viewing entry for an execution result of the target operation.

In some embodiments, the target content corresponding to the target operation is determined based on semantics of a name of the target operation.

In some embodiments, the interactive content includes bullet comments.

In some embodiments, the target operation includes an interactive operation or a playback control operation for the media item.

In some embodiments, the interactive operation includes one of the following: a watch-later addition operation to add the media item to a watch-later list of the user; a favorite operation to add the media item to a favorite list of the user; a like operation for the media item; or a prompt operation for a target control, the target control being configured to trigger the interactive operation or the playback control operation for the media item. In some embodiments, the playback control operation includes a setting operation for a playback control parameter of the media item.

In some embodiments, the interactive content is interactive content corresponding to a first-type interaction, and the target operation is an interactive operation corresponding to a second-type interaction.

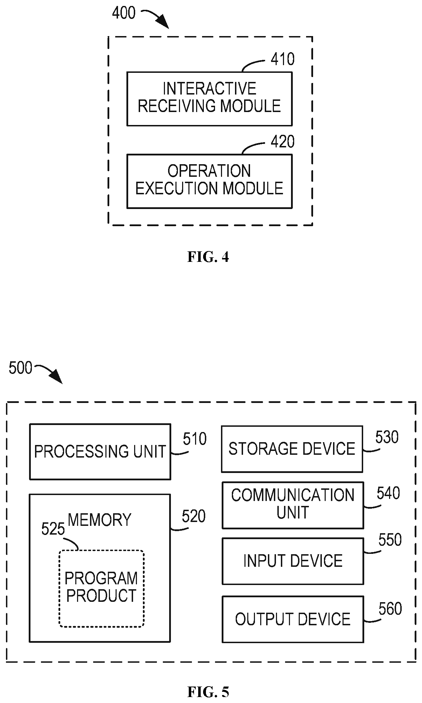

Embodiments of the present disclosure further provide a corresponding apparatus for implementing the above method or process. FIG. 4 illustrates a schematic structural block diagram of an apparatus 400 for content interaction according to some embodiments of the present disclosure. The apparatus 400 may be implemented as, or included in, the terminal device 110. Each module/component in the apparatus 400 may be implemented by hardware, software, firmware, or any combination thereof.

As shown in FIG. 4, the apparatus 400 includes an interaction receiving module 410 configured to receive, from an interactive input area, interactive content of a user for a media item while presenting the media item. The apparatus 400 further includes an operation execution module 420 configured to perform a target operation for the media item in response to detecting that the interactive content matches target content corresponding to the target operation.

In some embodiments, the apparatus 400 further includes an interaction presenting module configured to present the interactive content in an interactive display area of the media item.

In some embodiments, the operation execution module 420 includes a first information presenting module configured to present first prompt information for the target operation in response to detecting that the interactive content matches target content corresponding to the target operation, the first prompt information indicating whether to confirm execution of the target operation; and a target operation execution module configured to perform the target operation for the media item in response to detecting confirmation of the execution of the target operation.

In some embodiments, the apparatus 400 further includes a second information presenting module configured to present second prompt information after the execution of the target operation is completed, the second prompt information including a viewing entry for an execution result of the target operation.

In some embodiments, the target content corresponding to the target operation is determined based on semantics of a name of the target operation.

In some embodiments, the interactive content includes bullet comments.

In some embodiments, the target operation includes an interactive operation or a playback control operation for the media item.

In some embodiments, the interactive operation includes one of the following: a watch-later addition operation to add the media item to a watch-later list of the user; a favorite operation to add the media item to a favorite list of the user; a like operation for the media item; or a prompt operation for a target control, the target control being configured to trigger the interactive operation or the playback control operation for the media item. In some embodiments, the playback control operation includes a setting operation for a playback control parameter of the media item.

In some embodiments, the interactive content is interactive content corresponding to a first-type interaction, and the target operation is an interactive operation corresponding to a second-type interaction.

The units and/or modules included in the apparatus 400 may be implemented in various ways, including software, hardware, firmware, or any combination thereof. In some embodiments, one or more units and/or modules may be implemented using software and/or firmware, such as machine-executable instructions stored on a storage medium. In addition to machine-executable instructions or as an alternative, some or all units and/or modules in the apparatus 400 may be implemented at least partially by one or more hardware logic components. As an example, rather than a limitation, example types of hardware logic components that may be used include field programmable gate array (FPGA), application specific integrated circuit (ASIC), application specific standard parts (ASSP), system on chip (SOC), complex programmable logic device (CPLD), and so on.

It should be understood that one or more steps in the above method may be performed by an appropriate electronic device or combination of electronic devices. Such an electronic device or combination of electronic devices may include, for example, the terminal device 110 in Fig. 1.

FIG. 5 illustrates a block diagram of an electronic device 500 in which one or more embodiments in the present disclosure may be implemented. It would be appreciated that the electronic device 500 illustrated in FIG. 5 is merely illustrative and should not constitute any limitation on the functionality and scope of the embodiments described herein. The electronic device 500 shown in FIG. 5 may be configured to implement the terminal device 110 in FIG. 1. or the apparatus 400 in Fig. 4.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor capable of performing various processes according to a program stored in the memory 520. In a multiprocessor system, a plurality of processing units execute computer-executable instructions in parallel to improve the parallel processing capabilities of electronic device 500.

The electronic device 500 typically includes a variety of computer storage media. Such media may be any available media that are accessible to the electronic device 500, including, but not limited to, volatile and non-volatile media, removable and non-removable media. The memory 520 may be a volatile memory (e.g., a register, cache, random access memory (RAM)), non-volatile memory (e.g., read-only memory (ROM), electrically erasable programmable read-only memory (EEPROM), flash memory), or some combination thereof. The storage device 530 may be a removable or non-removable medium and may include a machine-readable medium, such as a flash drive, magnetic disk, or any other medium that can be used to store information and/or data and that can be accessed within the electronic device 500.

The electronic device 500 may further include an additional removable/non-removable, volatile/non-volatile storage medium. Although not shown in FIG. 5, a disk drive for reading from or writing to a removable, non-volatile magnetic disk (e.g., a "floppy disk") or an optical disk drive for reading from or writing to a removable, non-volatile optical disk may be provided. In these cases, each drive may be connected to a bus (not shown) by one or more data media interfaces. The memory 520 may include a computer program product 525 having one or more program modules configured to execute various methods or actions of the various embodiments in the present disclosure.

The communication unit 540 is configured to communicate with other electronic devices through a communication medium. Additionally, the functionality of components of the electronic device 500 may be implemented by a single computing cluster or multiple computing machines capable of communicating through a communication connection. Thus, the electronic device 500 may operate in a networked environment using a logical connection with one or more other servers, network personal computers (PCs), or another network node.

The input device 550 may be one or more input devices such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed. The external device, such as a storage device, a display device, etc., communicates with one or more devices that enable users to interact with the electronic device 500, or communicates with any device (e.g., a network card, a modem, etc.) that enables the electronic device 500 to communicate with one or more other electronic devices. Such communication may be performed via an input/output (I/O) interface (not shown).

According to example implementations in the present disclosure, a computer-readable storage medium having computer-executable instructions stored thereon is provided. The computer-executable instructions are executed by a processor to implement the method described above. According to example implementations in the present disclosure, a computer program product is further provided. The computer program product is tangibly stored on a non-transitory computer-readable medium and includes computer-executable instructions. The computer-executable instructions are executed by a processor to implement the method described above.

Various aspects in the present disclosure are described herein with reference to flowcharts and/or block diagrams of methods, apparatuses, devices, and computer program products implemented according to the present disclosure. It would be appreciated that each block of the flowchart and/or block diagram, and combinations of blocks in the flowcharts and/or block diagrams, may be implemented by computer readable program instructions.

These computer-readable program instructions may be provided to a processing unit of a general-purpose computer, special computer, or other programmable data processing apparatus to produce a machine that generates an apparatus to implement the functions/acts specified in one or more blocks in the flowchart and/or the block diagram when these instructions are executed through the processing units of the computer or other programmable data processing devices. These computer-readable program instructions may also be stored in a computer-readable storage medium. These instructions cause the computer, programmable data processing apparatus, and/or other devices to work in a specific way. Therefore, the computer-readable medium storing instructions includes an article of manufacture including instructions to implement aspects of the functions/acts specified in one or more blocks in the flowchart and/or block diagram(s).

The computer-readable program instructions may be loaded onto a computer, a programmable data processing apparatus, or a further device, such that a series of operational steps can be performed on the computer, programmable data processing apparatus, or the further device to produce a computer-implemented process. As such, the instructions executed on the computer, programmable data processing apparatus, or the further device implement the functions/acts specified in the one or more blocks in the flowchart and/or block diagram(s).

The flowchart and block diagrams in the drawings show the possible architecture, functions and operations of the system, the method, and the computer program product implemented according to various implementations in the present disclosure. In this regard, each block in the flowchart or block diagram may represent a part of a module, a program segment or instructions, which contains one or more executable instructions for implementing the specified logic function(s). In some alternative implementations, the functions marked in the blocks may also occur in a different order from those marked in the drawings. For example, two consecutive blocks may be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by a combination of a dedicated hardware and computer instructions.

Various implementations in the present disclosure have been described above. The above description is illustrative, not exhaustive, and the present application is not limited to the disclosed implementations. Without departing from the scope and spirit of the described implementations, many modifications and changes are obvious to those skilled in the art. The terminology used herein has been chosen to best explain the principles of the respective implementations, the practical applications or improvements to the technology in the marketplace, or to enable those skilled in the art to understand the implementations disclosed herein.

## Claims

1. A method for content interaction, comprising:
receiving, from an interactive input area, interactive content of a user for a media item while presenting the media item; and
performing a target operation for the media item in response to detecting that the interactive content matches target content corresponding to the target operation.

2. The method of claim 1, further comprising:
presenting the interactive content in an interactive display area of the media item.

3. The method of claim 1, wherein performing the target operation for the media item in response to detecting that the interactive content matches the target content corresponding to the target operation comprises:
presenting first prompt information for the target operation in response to detecting that the interactive content matches the target content corresponding to the target operation, the first prompt information indicating whether to confirm execution of the target operation; and
performing the target operation for the media item in response to detecting confirmation of the execution of the target operation.

4. The method of claim 3, further comprising:
presenting second prompt information after the execution of the target operation is completed, the second prompt information comprising a viewing entry for an execution result of the target operation.

5. The method of claim 1, wherein the target content corresponding to the target operation is determined based on semantics of a name of the target operation.

6. The method of claim 1, wherein the interactive content comprises bullet comments.

7. The method of claim 1, wherein the target operation comprises an interactive operation or a playback control operation for the media item.

8. The method of claim 7, wherein the interactive operation comprises one of the following:
a watch-later addition operation to add the media item to a watch-later list of the user,
a favorite operation to add the media item to a favorite list of the user,
a like operation for the media item, or
a prompt operation for a target control, the target control being configured to trigger the interactive operation or the playback control operation for the media item, and
wherein the playback control operation comprises a setting operation for a playback control parameter of the media item.

9. The method of claim 1, wherein the interactive content is interactive content corresponding to a first-type interaction, and the target operation is an interactive operation corresponding to a second-type interaction.

10. An apparatus for content interaction, comprising:
an interaction receiving module configured to receive, from an interactive input area, interactive content of a user for a media item while presenting the media item; and
an operation execution module configured to perform a target operation for the media item in response to detecting that the interactive content matches target content corresponding to the target operation.

11. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 9.

12. A computer-readable storage medium having a computer program stored thereon, the computer program being executable by a processor to implement the method of any of claims 1 to 9.

13. A computer program product comprising a computer program, wherein the computer program, when executed by a processor, implements the method of any of claims 1 to 9.
